(19) **Europäisches Patentamt European Patent Office Office européen des brevets**

(11) **EP 4 285 161 B1**

(12) **FASCICULE DE BREVET EUROPEEN**

(45) Date de publication et mention
de la délivrance du brevet:
**24.12.2025 Bulletin 2025/52**

(21) Numéro de dépôt: **22700848.9**

(22) Date de dépôt: **24.01.2022**

(51) Classification Internationale des Brevets (IPC):
***G01T 1/20*** *(2006.01)*

(52) Classification Coopérative des Brevets (CPC):
**G01T 1/28; G01T 1/20**

(86) Numéro de dépôt international:
**PCT/EP2022/051424**

(87) Numéro de publication internationale:
**WO 2022/161889 (04.08.2022 Gazette 2022/31)**

(54) **PROCEDE DE FABRICATION D'UN DETECTEUR DES FLUX D'UN PREMIER ET D'UN DEUXIEME RAYONNEMENTS IONISANTS**

VERFAHREN ZUR HERSTELLUNG EINES FLUSSDETEKTORS EINER ERSTEN UND EINER ZWEITEN IONISIERENDEN STRAHLUNG

METHOD FOR MANUFACTURING A FLUX DETECTOR OF A FIRST AND A SECOND IONISING RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.01.2021 FR 2100745**

(43) Date de publication de la demande:
**06.12.2023 Bulletin 2023/49**

(73) Titulaires:
• **Centre National de la Recherche Scientifique 75016 Paris 16 (FR)**
• **Université d'Aix Marseille 13007 Marseille 7 (FR)**
• **Institut National de la Santé et de la Recherche Médicale (INSERM) 75013 Paris 13 (FR)**
• **Institut Jean Paoli & Irene Calmettes Centre Regional de Lutte Contre le Cancer 13009 Marseille 9 (FR)**

(72) Inventeurs:
• **DARREON, Julien 13004 MARSEILLE 4 (FR)**
• **DEBNATH, Sree Bash Chandra 13008 MARSEILLE 8 (FR)**
• **TONNEAU, Didier 13008 MARSEILLE 8 (FR)**
• **FAUQUET, Carole 13008 MARSEILLE 8 (FR)**
• **TALLET, Agnès 13008 MARSEILLE 8 (FR)**

(74) Mandataire: **INNOV-GROUP 209 Avenue Berthelot 69007 Lyon (FR)**

(56) Documents cités:
**EP-A2- 0 703 469     WO-A1-2021/043773
WO-A1-99/08130     US-A1- 2017 184 730**

## Description

L'invention concerne un procédé de fabrication d'un détecteur des flux d'un premier et d'un deuxième rayonnements ionisants incidents qui se distinguent l'un de l'autre seulement par le fait que les énergies médianes des particules ionisantes dans les premier et deuxième rayonnement ionisant incident sont égales, respectivement, à une première et à une deuxième valeurs, la deuxième valeur différant de la première valeur par au moins 500 keV. L'invention concerne également un procédé de mesure de flux à l'aide du détecteur fabriqué par ce procédé.

De tels détecteurs sont utilisés, par exemple, dans le domaine de la caractérisation des matériaux, telle que des soudures, ou dans le domaine médical et, en particulier, en radiothérapie en Curiethérapie ou en hadronthérapie. Par exemple, de tels détecteurs sont utilisés pour ajuster les dimensions du champ du rayonnement ionisant dans le cas des traitements de petites tumeurs cancéreuses.

Un tel détecteur est par exemple décrit dans la demande JP2011191255A. Le détecteur décrit dans JP2011191255A est avantageux en ce que la calibration du détecteur varie peu sur une large plage d'énergies possibles pour les rayonnements ionisants incidents à mesurer. Autrement dit, l'amplitude du flux mesuré varie peu en fonction de l'énergie du rayonnement ionisant incident. Grâce à cela, les mesures réalisées pour des rayonnements ionisants incidents de différentes énergies sont directement comparables sans avoir besoin d'effectuer une correction complexe des mesures en fonction de l'énergie du rayonnement ionisant incident mesuré.

Pour faire cela, JP2011191255A enseigne de superposer, les uns au-dessus des autres, des empilements chacun formés d'une ou plusieurs épaisseurs en matériaux amplificateurs et d'une épaisseur de matériau transducteur. Le matériau amplificateur utilisé dans JP2011191255A est principalement de l'or. Lorsqu'un détecteur est conçu selon l'enseignement de JP2011191255A pour mesurer des rayonnements ionisants incidents de forte énergie, alors l'épaisseur totale de matériau lourd traversée par le rayonnement ionisant à mesurer est importante, c'est-à-dire typiquement supérieure à plusieurs millimètres. Cela augmente l'encombrement de ce détecteur et complexifie sa fabrication.

De l'état de la technique est également connu de WO99/18130A1, US2017/184730A1 et EP0703469A2.

Dans cette demande, on désigne par "rayonnement ionisant de faible énergie" un rayonnement ionisant dont l'énergie est inférieure à 100 keV. À l'inverse, on désigne par "rayonnement ionisant de forte énergie", un rayonnement ionisant dont l'énergie est supérieure à 100 keV et, de préférence, supérieure à 500 keV ou 1 MeV.

L'invention vise à proposer un procédé de fabrication qui permet d'obtenir un détecteur qui présente une calibration qui varie peu sur une large plage d'énergies tout en utilisant une épaisseur plus faible de matériau amplificateur que dans JP2011191255A. Elle a donc pour objet un procédé de fabrication conforme à la revendication 1.

L'invention a également pour un objet un procédé de mesure conforme à la revendication 6.

L'invention sera mieux comprise à la lecture de la description qui va suivre, donnée uniquement à titre d'exemple non limitatif et faite en se référant aux dessins sur lesquels :

- la figure 1 est une illustration schématique, partiellement en coupe transversale, d'un détecteur de flux de rayonnements ionisants incidents ;

- la figure 2 est un organigramme d'un procédé de fabrication et d'utilisation du détecteur de la figure 1 ;

- les figures 3, 5 et 6 sont des graphes illustrant des courbes utilisées lors de la fabrication du détecteur de la figure 1,

- la figure 4 est une illustration schématique d'un banc de mesure utilisé pour obtenir les courbes des figures 3, 5 et 6,

- la figure 7 est une illustration schématique d'un autre mode de réalisation du détecteur de la figure 1.

Dans ces figures, les mêmes références sont utilisées pour désigner les mêmes éléments. Dans la suite de cette description, les caractéristiques et fonctions bien connues de l'homme du métier ne sont pas décrites en détail.

Dans cette description des exemples détaillés de modes de réalisation sont d'abord décrits dans un chapitre I en référence aux figures. Ensuite, dans un chapitre II, des variantes de ces modes de réalisation sont présentées. Enfin, les avantages des différents modes de réalisation sont présentés dans un chapitre III.

### Chapitre I : Exemples de modes de réalisation :

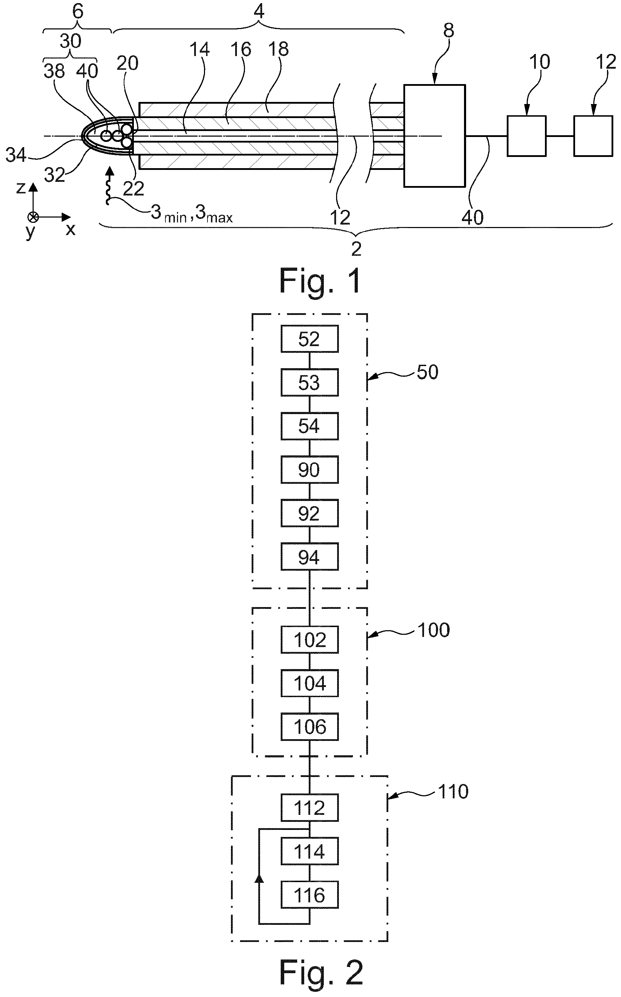

La figure 1 représente un détecteur 2, connu sous le terme de "dosimètre fibré". Le détecteur 2 est ici conçu pour mesurer, avec une calibration constante, des flux de rayonnements ionisants incidents de forte énergie. Les énergies des rayonnements ionisants à mesurer sont systématiquement comprises dans une plage étendue [$V_{min}$; $V_{max}$] d'énergie. Une plage d'énergie est ici dite "étendue" lorsque l'écart entre les énergies $V_{min}$ et $V_{max}$ est supérieur à 500 keV et, de préférence, supérieure à 1 MeV ou 4 MeV. L'énergie d'un rayonnement ionisant désigne l'énergie médiane des particules ionisantes de ce rayonnement. L'énergie médiane est exprimée en électron-volts.

Les rayonnements ionisants à mesurer avec le détecteur 2 sont identiques les uns aux autres sauf qu'ils diffèrent par leur l'énergie. Ici, les rayonnements ionisants incidents sont tous des rayons X de forte énergie. De plus, ces rayonnements ionisants se propagent tous le long d'une même direction de propagation parallèle à une direction Z d'un repère orthogonal XYZ. La direction Z est ici verticale.

Par la suite, on désigne par les références numériques $3_{min}$ et $3_{max}$, les rayonnements ionisants incidents dont les énergies sont égales, respectivement, à $V_{min}$ et $V_{max}$. Dans ce texte, les rayonnements ionisants incidents sur le détecteur 2 sont également appelés "rayonnements ionisants primaires".

Dans ce mode de réalisation, les rayonnements $3_{min}$ et $3_{max}$ correspondent aux rayonnements, respectivement, de plus faible énergie et de plus forte énergie que le détecteur 2 doit mesurer.

Le détecteur 2 comporte :

- une fibre optique 4,
- une partie sensible 6 au rayonnement ionisant située au niveau de l'extrémité distale de la fibre optique 4,
- un amplificateur optique 8 raccordé à l'extrémité proximale de la fibre 4,
- un capteur 10 de photons raccordé à une sortie de l'amplificateur 8, et
- une unité 12 de traitement des signaux mesurés par le capteur 10.

La fibre 4 est une fibre optique monomode ou multimode apte à guider des photons le long d'un axe 12 de propagation. Ici, l'axe 12 s'étend parallèlement à la direction X du repère orthogonal XYZ. Par exemple, la fibre 4 est une fibre pouvant transmettre toute longueur d'onde du proche ultraviolet à l'infrarouge. La bande passante de la fibre est choisie centrée sur la longueur d'onde de luminescence du matériau 30 décrit plus loin. Par exemple, la fibre 4 est ici conçue pour guider de la lumière présentant une longueur d'onde $\lambda_f$ comprise entre 1 360 nm et 1 625 nm. Dans ce mode de réalisation, la longueur d'onde $\lambda_f$ est égale à 1 550 nm. Dans cette description, comme il est d'usage dans le domaine technique des fibres optiques, le terme "lumière" est utilisé dans un sens large qui désigne toute onde électromagnétique guidée par la fibre optique. En particulier, le sens du terme "lumière" n'est pas limité à la lumière visible.

La fibre 4 comporte dans l'ordre :

- un cœur 14 à l'intérieur duquel se propage la lumière,
- une gaine 16 qui enveloppe le cœur 14, et
- un revêtement 18 de protection qui enveloppe la gaine 16.

Le matériau dans lequel est réalisé le cœur 14 est un matériau choisi pour présenter de faible perte par propagation à la longueur d'onde $\lambda_f$.

La résolution spatiale de la mesure effectuée avec le détecteur 2 est liée, en outre, au diamètre $D_{14}$ du cœur 14. Par exemple, le diamètre $D_{14}$ est inférieur à 110 $\mu$m ou 70 $\mu$m et, dans le cas d'une fibre optique monomode, souvent inférieur à 10 $\mu$m. Le diamètre $D_{14}$ est généralement aussi supérieur à 1 $\mu$m ou 5 $\mu$m. Ici, le diamètre $D_{14}$ est égal à 50 $\mu$m et la fibre est de ce fait une fibre multimode.

La gaine 16 est réalisée dans un matériau dont l'indice de réfraction, par rapport à l'indice de réfraction du cœur 14, permet de guider et de maintenir efficacement la lumière à l'intérieur du cœur 14. L'épaisseur de la gaine 16 est aussi choisie pour guider et maintenir la lumière à l'intérieur du cœur 14. Ainsi, la lumière se propage essentiellement à l'intérieur du cœur 14. L'épaisseur de la gaine 16 est classiquement supérieure à 50 $\mu$m ou 100 $\mu$m. Le diamètre extérieur $D_{16}$ de la gaine 16 est habituellement compris entre $1,5D_{14}$ et $5D_{14}$ ou entre $2D_{14}$ et $3D_{14}$. Ici, le diamètre $D_{16}$ est égal à 125 $\mu$m.

Le revêtement 18 sert à protéger la gaine 16 et le cœur 14. Il est par exemple réalisé en polymère. L'épaisseur du revêtement 18 est classiquement supérieure à 50 $\mu$m ou 100 $\mu$m. Pour obtenir un faible encombrement de la partie sensible 6 du détecteur 2, le diamètre $D_{18}$ extérieur du revêtement 18 est choisi inférieur à 1 mm ou à 500 $\mu$m. Le diamètre $D_{18}$ est souvent compris entre $1,5D_{16}$ et $3D_{16}$. Ici, le diamètre $D_{18}$ est égal à 220 $\mu$m.

Typiquement, la longueur de la fibre 4 entre ses extrémités proximale et distale est supérieure à 20 cm ou 50 cm et habituellement inférieure à 100 m. Par exemple, la longueur de la fibre 4 est égale à 1,50 m.

L'extrémité distale de la fibre 4 comporte une face 20 d'entrée de lumière réalisée dans le cœur 14. Dans ce mode de réalisation, la face 20 est une face plane circulaire perpendiculaire à la direction X et dont le diamètre est égal au diamètre du cœur 14. La face 20 présente de préférence un grand nombre de symétries de révolution autour de l'axe 12. Dans cette demande, par un grand nombre de symétries de révolution, on désigne un nombre de symétrie de révolution supérieur à quatre, six ou dix et, de préférence, un nombre infini.

En plus de la face 20, l'extrémité distale comporte aussi une face 22 qui entoure immédiatement la face 20 et qui est réalisée dans la gaine 16. Ici, cette face 22 est une face annulaire plane qui entoure complètement la face 20 et qui est située dans le même plan que la face 20. Les diamètres intérieur et extérieur de cette face 22 sont donc égaux, respectivement, aux diamètres $D_{14}$ et $D_{16}$.

La partie sensible 6 comporte un matériau transducteur 30 qui génère des photons lorsqu'il est excité par le rayonnement ionisant primaire et/ou secondaire. Ici, ce matériau transducteur est un matériau luminescent. Ce matériau transducteur 30 est entièrement recouvert d'une couche réflectrice 32, elle-même entièrement recouverte d'une couche amplificatrice 34.

Le matériau transducteur 30 a ici la forme d'une goutte fixée sur l'extrémité distale de la fibre 4. De préférence, cette goutte présente un grand nombre de symétries de révolution autour de l'axe 12. Le sommet de cette goutte, le plus éloigné de la face 20, est situé sur l'axe 12.

Ici, le matériau 30 recouvre directement et entièrement la face 20 et plus de 50 % ou 70 % de la surface de la face 22.

Le matériau transducteur 30 présente, dans ce mode de réalisation, la forme d'une partie d'un ellipsoïde, cette partie d'ellipsoïde étant comprise entre :

- un plan de coupe perpendiculaire à sa longueur, et
- son sommet le plus éloigné de ce plan de coupe.

Sur l'illustration de la figure 1, le plan de coupe est confondu avec le plan contenant les faces 20 et 22.

La longueur maximale du matériau transducteur 30 correspond ici à la distance, le long de l'axe 12, entre la face 20 et le sommet de la goutte. Cette longueur maximale est comprise entre $0,1D_{14}$ et $3D_{16}$. Dans ce mode de réalisation, la longueur maximale du matériau transducteur 30 est par exemple comprise entre $D_{14}$ et $2D_{16}$. La longueur maximale du matériau transducteur 30 est donc comprise entre 50 $\mu$m et 250 $\mu$m.

Ici, le matériau transducteur 30 est un mélange d'un polymère 38 et de scintillateur 40. La résolution spatiale de la mesure effectuée avec le détecteur 2 dépend aussi de la taille et de la structure du scintillateur utilisé. Par exemple, le scintillateur 40 se présente sous la forme d'un agrégat de grains scintillateurs. Par exemple, la plus grande longueur d'un de ces grains scintillateur est inférieure à 40 $\mu$m ou 10 $\mu$m . Ici, la longueur moyenne de chaque grains scintillateur est égale à 10 $\mu$m.

Le polymère 38 est ici un polymère apte à polymériser et ainsi coller le matériau transducteur 30 sur l'extrémité distale de la fibre 4. Par exemple, il s'agit du polymère PMMA (Polyméthacrylate de méthyle), ou toute autre résine photosensible utilisée en microélectronique, ou une colle polymère, ou cyanolite.

Le scintillateur 40 est choisi en fonction de la longueur d'onde $\lambda_f$ de la lumière que l'on souhaite générer en réponse à une exposition au rayonnement ionisant à mesurer. Dans le cas d'une longueur d'onde $\lambda_f$ égale à 1 550 nm, par exemple, le scintillateur 40 suivant convient : $In_xGa_{(1-x)}As$, où l'indice X est égal à 0,45. Ce scintillateur est sensible aux rayons X et, en particulier, aux rayons X de faible énergie.

La couche 32 réfléchit la lumière émise par le matériau transducteur 30 pour la renvoyer, autant que possible, vers la face 20. Par « réfléchir la lumière », on désigne le fait que la couche 32 réfléchit au moins Z% de la lumière à la longueur d'onde $\lambda_f$, où Z est un nombre supérieur à 50 et, de préférence, supérieur ou égal à 90 ou 95. De plus, ici, la couche 32 est réalisée dans un matériau transparent au rayonnement ionisant qui excite le matériau transducteur 30. Ici, par « transparent au rayonnement ionisant », on désigne le fait que la couche 32 laisse passer au moins Y% du rayonnement ionisant incident, où Y est un nombre strictement supérieur à 50 et, de préférence, supérieur ou égal à 80, 90 ou 95. Par exemple, la couche 32 est réalisée en aluminium.

L'épaisseur de la couche 32 est faible, c'est-à-dire inférieure à 10 $\mu$m et, de préférence, inférieure à 1 $\mu$m ou 300 nm. L'épaisseur de la couche 32 est également généralement supérieure à 20 nm ou 50 nm. Ici, l'épaisseur de la couche 32 est comprise entre 100 nm et 300 nm. Par exemple, l'épaisseur de la couche 32 est égale à 150 nm.

La couche 34 interagit avec le rayonnement ionisant primaire pour, en réponse, générer un rayonnement ionisant secondaire de plus faible énergie. Ce rayonnement secondaire est par exemple composé de rayons X de plus faible énergie et/ou de particules ionisantes de plus faible énergie. Le rayonnement secondaire réémis par la couche 34 dépend du matériau utilisé pour fabriquer la couche 34 et de l'énergie du rayonnement primaire incident. A titre indicatif si la couche 34 est en plomb (numéro atomique 82), si l'énergie du rayonnement ionisant primaire est supérieure à 6 MeV, le rayonnement ionisant secondaire est composé principalement de paires électrons-positrons. Si le rayonnement ionisant primaire est compris entre 1 MeV et 6 MeV, le rayonnement ionisant secondaire est composé principalement d'électrons et de rayons X de forte énergie émis, par effet Compton. Si le rayonnement ionisant primaire est compris entre 10 keV et 1 MeV, le rayonnement ionisant secondaire est composé principalement de rayons X de forte énergie émis par effet photoélectrique. Dans ce dernier cas le phénomène est connu sous le terme de fluorescence à rayon X et encore plus connu sous l'acronyme XRF (« *X-Ray Fluorescence* »).

À cause de la présence de la couche 34, le matériau transducteur 30 est exposé, en plus du rayonnement ionisant primaire, au rayonnement ionisant secondaire généré par la couche 34. De plus, le rayonnement secondaire est à énergie plus faible que le rayonnement ionisant incident et donc est davantage absorbé par le matériau transducteur 30, ce qui augmente également son émission. Ainsi, en réponse à la même intensité du rayonnement ionisant primaire, le matériau transducteur 30 génère plus de photons que si la couche 34 était omise. La couche 34 amplifie donc le nombre de photons générés, ce qui accroît la sensibilité du détecteur 2.

Il est admis que le flux du rayonnement ionisant secondaire généré par la couche 34 augmente :

- en fonction du numéro atomique des atomes du matériau qui la compose, et
- de l'épaisseur $e_{34}$ de cette couche 34.

Dans ce mode de réalisation, la couche 34 est traversée deux fois par le rayonnement ionisant primaire qui se propage parallèlement à la direction Z. Dans ces conditions, l'épaisseur totale $e_T$ de matériau amplificateur traversée par le rayonnement ionisant primaire est égale à $2e_{34}$.

Pour augmenter de façon significative le nombre de photons générés par le matériau transducteur 30, il a été déterminé que l'épaisseur $e_T$ doit être supérieure à 15 µm et, de préférence, supérieure à 30 µm ou 50 µm.

Par ailleurs, dans ce mode de réalisation, pour minimiser l'encombrement de la partie sensible 6, l'épaisseur $e_T$ est, de préférence, aussi inférieure à 1,5 mm ou 1 mm. De plus, comme expliqué en détail plus loin, l'épaisseur $e_T$ est choisie pour que la calibration du détecteur 2 soit la même lorsque le rayonnement $3_{min}$ est mesuré que lorsque le rayonnement $3_{max}$ est mesuré. Sur la figure 1, les épaisseurs des différentes couches n'ont pas été représentées à l'échelle.

Il a aussi été déterminé que le numéro atomique à partir duquel l'augmentation du nombre de photons générés par le matériau transducteur est significatif, est le n°29, c'est-à-dire celui correspondant au cuivre. Par la suite, on désigne par le terme "lourd" tout matériau dont le numéro atomique est supérieur ou égal à 29. De plus, dans ce mode de réalisation, pour que l'épaisseur $e_T$ reste inférieure à 1 mm, la couche 34 est principalement réalisée dans un matériau lourd dont le numéro atomique est supérieur ou égale à 74 (Tungstène) et, de préférence, supérieur ou égale à 79, c'est-à-dire à celui correspondant à l'or.

Dans cette description, l'expression « un élément principalement réalisé en matériau X » signifie que le matériau X représente au moins 70% ou 90 % ou 95% de la masse de cet élément.

Enfin, de préférence, le matériau choisi pour réaliser la couche 34 doit permettre un dépôt sous forme de couche aussi simple que possible à réaliser. Par exemple, l'or et le plomb sont des métaux qui satisfont aux différentes contraintes exposées ci-dessus. Ici, à titre d'illustration, la couche 34 est entièrement réalisée en plomb.

Ici, la longueur d'onde $\lambda_f$ utilisée correspond à une longueur d'onde classiquement utilisée dans l'industrie des télécommunications. Ainsi, l'amplificateur 8 est, de préférence, un amplificateur optique classiquement utilisé dans l'industrie des télécommunications pour amplifier et répéter la lumière qui se propage à l'intérieur des fibres optiques sans avoir pour cela à transformer la lumière à amplifier en un signal électrique. Un exemple de réalisation d'un tel amplificateur est illustré sur la figure 2 de la demande déposée le 01/09/2020 sous le numéro PCT/EP2020/074364.

Le signal optique amplifié est envoyé au capteur 10 par l'intermédiaire d'une fibre optique 40. Le capteur 10 mesure une grandeur physique proportionnelle au nombre de photons reçus par seconde. Ce nombre de photons reçus par seconde constitue une mesure proportionnelle au flux de particules ionisantes du rayonnement ionisant primaire. Pour cela, ici, le capteur 10 transforme l'intensité lumineuse reçue en un signal électrique traité par l'unité 12 de traitement. L'intensité lumineuse reçue est proportionnelle au nombre de photons reçus par seconde. Le capteur 10 est par exemple une photodiode ou un compteur de photons.

L'unité 12 reçoit le signal électrique généré par le capteur 10 et, en réponse, commande un ou plusieurs appareils électriques. Par exemple, l'appareil électrique commandé est un écran qui affiche l'intensité du rayonnement ionisant primaire mesurée par le détecteur 2. L'appareil électrique commandé peut aussi être la source du rayonnement ionisant primaire, ce qui permet, par exemple, d'asservir l'intensité de ce rayonnement ionisant primaire sur une consigne d'intensité enregistrée dans l'unité 12.

La figure 2 représente un procédé de fabrication et d'utilisation du détecteur 2 dans le cas particulier où les valeurs $V_{min}$ et $V_{max}$ sont égales, respectivement, à 2 MeV et 4,5 MeV.

Le procédé débute par une phase 50 de conception du détecteur 2.

Lors d'une étape 52, des valeurs $V_1$ et $V_2$ sont acquises. Ces valeurs $V_1$ et $V_2$ délimitent la plage sur laquelle la calibration du détecteur 2 varie peu en fonction de l'énergie du rayonnement ionisant primaire à mesurer. Pour la réalisation du détecteur 2, les valeurs $V_1$ et $V_2$ doivent être proches des valeurs, respectivement, $V_{min}$ et $V_{max}$. Par exemple, ici, la valeur $V_1$ est choisie dans la plage $[0,7V_{min} ; 1,1V_{min}]$ et la valeur $V_2$ est choisie dans la plage $[0,9V_{max}; 1,3V_{max}]$. De préférence, les valeurs $V_1$ et $V_2$ sont choisies égales, respectivement, aux valeurs $V_{min}$ et $V_{max}$. Ici, les valeurs $V_1$ et $V_2$ sont donc égales, respectivement, à 2 MeV et 4,5 MeV.

Ensuite, lors d'une étape 53, le matériau amplificateur à utiliser pour réaliser la couche 34 est sélectionné. Ici, c'est le plomb qui est sélectionné.

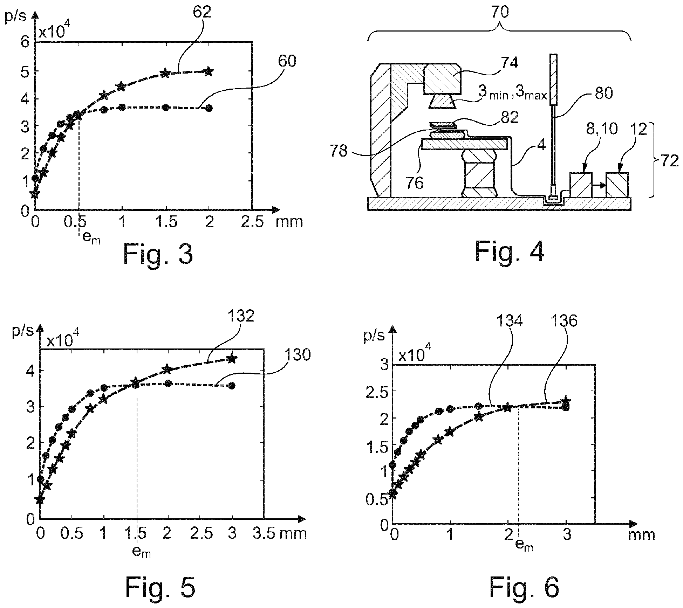

Lors d'une étape 54, la courbe 60 (figure 3) est obtenue. La courbe 60 représente l'évolution du nombre de photons générés par seconde par le matériau transducteur 30 en fonction de l'épaisseur $e_T$ de matériau amplificateur traversée par le rayonnement $3_{min}$. Sur la figure 3, l'axe des abscisses est gradué en millimètre et l'axe des ordonnées est gradué en nombre de photons par seconde noté "p/s".

Ici, la courbe 60 est obtenue expérimentalement. Pour cela, le banc 70 de mesure représenté sur la figure 4 est utilisé. Ce banc 70 comporte :

- un détecteur 72 du flux du rayonnement ionisant primaire identique au détecteur 2 sauf que la partie sensible 6 est remplacée par une partie sensible 78,
- une source 74 apte à émettre, en alternance, les rayonnements $3_{min}$ et $3_{max}$ à mesurer par le détecteur 72,
- un support 76 qui supporte la partie sensible 78 du détecteur 72,
- une paroi protectrice 80 pour répartir le banc 70 en deux zones distinctes, à savoir une zone exposée aux rayonnements $3_{min}$ et $3_{max}$ et dans laquelle se trouvent la source 74 et la partie sensible 78, et une zone protégée des rayonnements ionisants dans laquelle se trouvent l'amplificateur 8, le capteur 10 et l'unité 12 de traitement du détecteur 72.

La source 74 est par exemple un accélérateur linéaire de particules connu sous l'acronyme LINAC (« Linear Particle Accelerator »).

La partie sensible 78 est identique à la partie sensible 6 sauf que la couche amplificatrice 34 est omise.

Enfin, ce banc 70 de mesure comporte aussi un jeu de plusieurs plaques de plomb amovibles de différentes épaisseurs chacune. Sur la figure 4, seule une plaque 82 de ce jeu est représentée. Lors des mesures, une seule des plaques de ce jeu est déposée sur la partie sensible 78. Cela est représenté sur la figure 4 dans le cas particulier de la plaque 82. La plaque 82 s'étend principalement dans un plan horizontal perpendiculaire à la direction de propagation des rayonnements $3_{min}$ et $3_{max}$. La plaque 82 est déposée directement sur la partie sensible 78.

Pour construire la courbe 60, la source 74 est réglée pour émettre le rayonnement $3_{min}$. Lors de chaque mesure, le rayonnement $3_{min}$ est généré par la source 74 et le détecteur 72 mesure le flux de ce rayonnement.

Si une plaque de plomb est déposée sur la partie sensible 78, le détecteur 72 mesure le nombre de photons par seconde générés par le matériau 30 après que le rayonnement $3_{min}$ ait traversé cette plaque de plomb.

Ici, une première mesure est réalisée en absence de plaque de plomb déposée sur la partie sensible 78. Cela permet d'obtenir le point de la courbe 60 correspondant à une épaisseur $e_T$ nulle de matériau amplificateur.

Ensuite, des mesures sont réalisées pour différentes épaisseurs de la plaque de plomb. Pour cela, à chaque fois, la plaque de plomb amovible est remplacée par une plaque de plomb d'épaisseur différente. Cela permet d'obtenir différents points de la courbe 60 pour différentes épaisseurs de la plaque de plomb.

La courbe 60 est ensuite construite par interpolation entre les différents points mesurés. Par exemple, l'interpolation est une interpolation polynomiale par partie.

Lors d'une étape 90, la courbe 62 (figure 3) est obtenue. La courbe 62 représente l'évolution du nombre de photons par seconde générés par le matériau 30 en fonction de l'épaisseur $e_T$ traversée par le rayonnement $3_{max}$. La courbe 62 est obtenue comme décrit dans le cas de la courbe 60 sauf que la source 74 est réglée pour émettre le rayonnement $3_{max}$ au lieu du rayonnement $3_{min}$.

Lors d'une étape 92, l'abscisse $e_m$ du point d'intersection entre les courbes 60 et 62 est déterminée. Ici, l'abscisse $e_m$ est inférieur ou égal à 600 $\mu$m et supérieur ou égal à 450 $\mu$m. Dans cet exemple, l'abscisse $e_m$ est égale à 0,5 mm. Ce point d'intersection est particulièrement intéressant car cela signifie que lorsque l'épaisseur $e_T$ est égale ou proche de la valeur de l'abscisse $e_m$, alors la calibration du détecteur 2 est indépendante de l'énergie des rayonnements $3_{min}$ et $3_{max}$.

Lors d'une étape 94, l'épaisseur $e_T$ est sélectionnée entre $0,9e_m$ et $1,1e_m$ et, de préférence, entre $0,95e_m$ et $1,05e_m$ et, de façon encore plus avantageuse, entre $0,98e_m$ et $1,02e_m$. Ici, l'épaisseur $e_T$ est égale à $e_m$.

Dans le cas de la partie sensible 6, l'épaisseur $e_T$ est égale à $2e_{34}$ puisque le rayonnement ionisant primaire à mesurer traverse successivement une première fois la couche 34, puis le matériau 30, puis une seconde fois la couche 34. Lors de la première et de la seconde traversée de la couche 34, à chaque fois, la couche 34 interagit avec le rayonnement ionisant primaire. Le résultat de chacune de ces interactions est la production par la couche 34 de particules ionisantes secondaires d'énergie plus faible que l'énergie des particules ionisantes primaires du rayonnement ionisant primaire. Ces particules ionisantes secondaires peuvent être des photons, des électrons ou des positrons. Ces particules ionisantes secondaires sont émises dans toutes les directions par la couche 34. Ainsi, même la seconde traversée de la couche 34 produit des particules ionisantes secondaires qui vont ensuite interagir avec le matériau 30.

L'épaisseur $e_{34}$ est ici choisie égale à $e_m/2$ c'est-à-dire égale à 300 $\mu$m. Dans ces conditions, le nombre de photons par seconde générés par le matériau 30 est identique aussi bien pour le rayonnement $3_{min}$ que pour le rayonnement $3_{max}$. De plus, il a aussi été observé que la sensibilité du détecteur 2 est sensiblement constante tant que l'énergie du rayonnement ionisant primaire à mesurer à l'aide de ce détecteur 2 est comprise entre les valeurs $V_{min}$ et $V_{max}$. Ainsi, le détecteur 2 présente une calibration qui varie peu tant que l'énergie du rayonnement ionisant primaire reste comprise entre les énergies $V_{min}$ et $V_{max}$.

Une fois l'épaisseur $e_{34}$ déterminée, la phase de conception s'achève et le procédé se poursuit par une phase 100 de fabrication du détecteur 2.

Lors d'une étape 102, l'empilement de l'épaisseur $e_T$ de matériau amplificateur et de l'épaisseur de matériau transducteur est réalisé. Par exemple, un mélange liquide du polymère 38 et du scintillateur 40 est préparé. Ensuite, l'extrémité distale de la fibre 4 est trempée dans ce mélange liquide puis retirée. La goutte du mélange liquide qui reste collée sur l'extrémité distale de la fibre 4 est alors séchée, par exemple, en la plaçant dans un four chauffé pendant quelques secondes. La goutte devient alors solide et forme le matériau transducteur 30.

Ensuite, la couche 32 est déposée sur le matériau transducteur 30 par un procédé conventionnel de dépôt comme par pulvérisation ou par évaporation. Selon le procédé de dépôt mis en œuvre, une très fine couche d'accroche est d'abord déposée sur le matériau transducteur 30. Cette couche d'accroche a généralement une épaisseur inférieure à 20 nm. Par exemple, la couche d'accroche est réalisée en titane ou en chrome.

Enfin, la couche 34 est déposée directement sur la couche 32, par exemple, par les mêmes procédés de dépôt que ceux décrits dans le cas particulier de la couche 32. Elle peut aussi être déposée par d'autres procédés de dépôt plus rapides et moins coûteux comme l'électrolyse ou un dépôt "électroless". Eventuellement, une très fine couche d'accroche, de moins de 20 nm d'épaisseur est interposée entre la couche 32 et la couche 34.

L'épaisseur $e_{34}$ de la couche 34 déposée est ici égale à celle choisie lors de la phase 50 de conception, c'est-à-dire égale à 300 $\mu$m.

Ainsi, dans la direction Z de propagation des rayonnements incidents à mesurer, on obtient un empilement de matériau amplificateur et de matériau transducteur dans lequel l'épaisseur $e_T$ de matériau amplificateur traversée par le rayonnement ionisant à mesurer est égale à $e_m$.

Ensuite, lors d'une étape 104, l'extrémité proximale de la fibre 4 est raccordée optiquement à l'amplificateur 8 et l'amplificateur 8 est raccordé optiquement au capteur 10.

Lors d'une étape 106, le capteur 10 est raccordé à l'unité 12 de traitement.

La fabrication du détecteur 2 est alors achevée et une phase 110 d'utilisation peut débuter.

Lors de la phase 110, le détecteur 2 est utilisé pour mesurer le flux de plusieurs rayonnements ionisants primaires dont les énergies sont systématiquement comprise dans la plage [$V_{min}$; $V_{max}$].

Ainsi, lors d'une étape 112, la partie sensible 6 du détecteur 2 est positionnée par rapport à la source du rayonnement ionisant primaire à mesurer comme décrit en référence à la figure 1. Ainsi, l'axe 12 s'étend horizontalement et le rayonnement ionisant à mesurer se propage parallèlement à la direction Z.

La partie sensible 6 est par exemple aussi placée à l'intérieur d'un objet à traiter ou à imager avec le rayonnement ionisant primaire. La partie sensible 6 peut aussi être placée devant ou derrière cet objet à traiter.

Ensuite, lors d'une étape 114, le rayonnement ionisant primaire est émis et, en même temps, le détecteur 2 mesure le nombre de photons par seconde générés par le matériau 30. Ce nombre de photons par seconde mesuré est ensuite par exemple multiplié par la durée d'exposition de l'objet à ce rayonnement ionisant incident et par l'énergie de ce rayonnement ionisant incident pour obtenir une dose du rayonnement ionisant incident appliquée sur cet objet pendant l'étape 114. Par exemple, lors de la première exécution de l'étape 114, le rayonnement ionisant primaire utilisé est le rayonnement $3_{min}$.

Ensuite, lors d'une étape 116, le réglage de la source de rayonnement ionisant primaire est modifié pour émettre un autre rayonnement ionisant primaire d'énergie différente. Cette énergie différente est comprise entre les valeurs $V_{min}$ et $V_{max}$. Ensuite, l'étape 114 est de nouveau exécutée mais cette fois-ci avec cet autre rayonnement ionisant primaire. Par exemple, lors d'une seconde exécution de l'étape 114, le rayonnement ionisant primaire utilisé est le rayonnement $3_{max}$.

Étant donné que le détecteur 2 a été conçu pour que sa calibration soit la même pour le rayonnement $3_{min}$ que pour le rayonnement $3_{max}$, les mesures du détecteur 2 réalisées lors de l'étape 114 n'ont pas besoin d'être corrigées ou sont plus simple à corriger pour compenser une variation de la calibration du détecteur 2 en fonction de l'énergie du rayonnement ionisant primaire utilisé.

Ce qui a été décrit précédemment s'applique à d'autres matériaux amplificateurs que le plomb. Bien que des matériaux lourds comme l'or, le plomb et le tungstène soient préférés pour les applications visées pour le détecteur 2, ce qui a été décrit s'applique aussi à d'autres matériaux lourds dont le numéro atomique est inférieur à 74. En particulier, des expériences ont été réalisées pour vérifier qu'il existe toujours un point d'intersection entre des courbes similaires aux courbes 60 et 62 mais construites pour d'autres matériaux. Pour illustrer cela, le graphe de la figure 5 montre des courbes 130 et 132 obtenues expérimentalement comme précédemment décrit mais en utilisant un jeu de plaques de cuivre de différentes épaisseurs à la place du jeu de plaques de plomb. Les courbes 130 et 132 correspondent, respectivement, aux énergies de 2 MeV et 4,5 MeV.

La figure 6 montre des courbes 134 et 136 mesurées expérimentalement dans le cas où un jeu de plaques en aluminium de différentes épaisseurs est utilisé à la place du jeu de plaques de plomb. Les courbes 134 et 136 correspondent, respectivement, aux énergies de 2 MeV et 4,5 MeV. Dans ce cas, l'épaisseur $e_m$ est égale à 2100 $\mu$m.

On notera que la valeur de l'abscisse $e_m$ augmente lorsque le numéro atomique du matériau amplificateur utilisé diminue. Il a été déterminé que l'abscisse $e_m$ est inférieure à 1 mm seulement si le matériau amplificateur est principalement réalisé dans des matériaux dont les numéros atomiques sont supérieurs à 74 ou 79.

L'enseignement donné dans le cas particulier d'un dosimètre fibré peut aussi être appliqué aux détecteurs dans lesquels la partie sensible comporte un matériau transducteur qui génère des charges électriques lorsqu'il est excité par le rayonnement ionisant secondaire à la place de photons. De tels détecteurs sont appelés "dosimètre à semi-conducteur". Ils sont également connus sous le terme de "capteur électronique" ou "détecteur électronique" de type PIN ou transistor ou jonction Schottky ou diode avalanche.

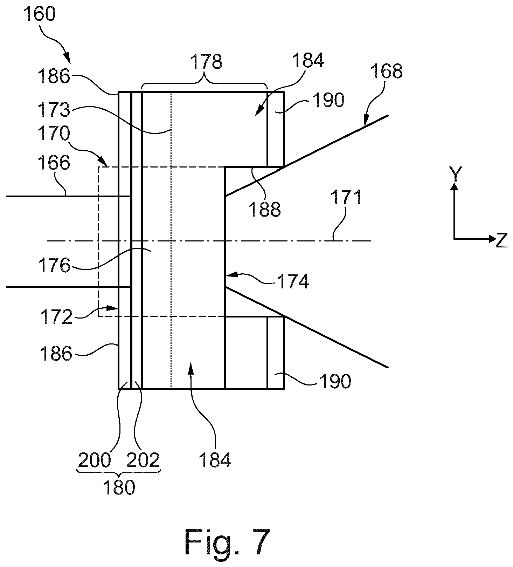

A titre d'illustration, la figure 7 représente un exemple possible d'agencement d'un tel détecteur 160. Dans cet exemple de réalisation, l'architecture du détecteur 160 se distingue de celle décrite en référence à la figure 2 de la demande WO2017198630 principalement par le fait qu'il comporte en plus une couche amplificatrice. Ainsi, pour plus de détail sur les caractéristiques connues de l'architecture du détecteur 160 ou les différentes variantes d'une telle architecture, le lecteur peut consulter cette demande WO2017198630.

Le détecteur 160 comporte une partie sensible 170 située sur un axe 171 le long duquel se propage le rayonnement ionisant primaire. La partie sensible 170 est centrée sur l'axe 171. Plus précisément, dans ce mode de réalisation, la partie sensible 170 est un cylindre de révolution dont l'axe de révolution est confondu avec l'axe 171.

La partie sensible 170 présente une face 172 d'entrée située dans un plan vertical parallèle à des directions X et Y d'un repère orthogonal XYZ, où la direction Z est parallèle à l'axe 171. La face 172 est directement exposée au rayonnement ionisant primaire 166 incident. La partie sensible 170 comporte aussi une face 174 de sortie située dans un autre plan vertical perpendiculaire à l'axe 171. La portion du faisceau 166 qui n'a pas interagi avec la partie sensible 170, ressort du détecteur 160 par la face 174 et forme un faisceau 168.

La partie sensible 170 comporte un matériau transducteur apte à générer des charges électriques lorsqu'il est traversé par le rayonnement ionisant primaire. Dans ce mode de réalisation, le matériau transducteur est une région 176 de déplétion également appelée « zone de charge d'espace ». Cette région 176 produit des porteurs de charge d'un premier type et des porteurs de charge d'un deuxième type lorsqu'elle est traversée par le rayonnement 166. Cette région 176 est située entre la face 172 et une limite 173 représentée par un trait en pointillés parallèles aux directions X et Y.

Dans cet exemple, le détecteur 160 comporte une couche semi-conductrice 178 et une couche conductrice 180 directement déposée sur la face de la couche 178 tournée vers le rayonnement ionisant 166 incident. La face 172 est ici formée par la face extérieure de la couche 180 tournée vers le rayonnement ionisant 166 incident. La face 174 de la partie sensible 170 est formée par la face de la couche 178 tournée du côté opposé à la face 172.

La région 176 est située dans la région de la couche 178 en contact avec la couche conductrice 180. L'association des couches 178 et 180 forme une jonction à effet redresseur et plus précisément une diode Schottky dans ce mode de réalisation.

Le matériau semi-conducteur utilisé pour réaliser la couche 178 comporte deux bandes d'énergie connues sous les termes, respectivement, de « bande de valence » et « bande de conduction ». Dans le cas des matériaux semi-conducteurs, ces deux bandes d'énergie sont séparées l'une de l'autre par une bande interdite plus connue sous le terme anglais de « gap ». De préférence, le matériau semi-conducteur utilisé pour réaliser la couche 178 est un matériau semi-conducteur à grand gap, c'est-à-dire un matériau semi-conducteur présentant un gap dont la valeur est au moins deux fois supérieure à la valeur du gap du silicium. Typiquement, le gap du matériau semi-conducteur utilisé pour la couche 178 est donc supérieur à 2,3 eV.

Ici, la couche 178 est réalisée en carbure de silicium SiC-4H. De plus, la couche semi-conductrice 178 est en plus dopée. Par exemple, lorsque la couche semi-conductrice 178 est réalisée en carbure de silicium, un dopage P peut être obtenu par implantation d'atomes de bore et, alternativement, un dopage N peut être obtenu par implantation d'atomes d'azote.

Dans ce mode de réalisation, les couches 178 et 180 s'étendent transversalement au-delà de la partie sensible 170 pour former une partie périphérique 184 qui entoure complètement la partie sensible 170. Contrairement à la partie sensible 170, la partie périphérique 184 n'est pas traversée par le rayonnement 166. La portion 186 de la couche conductrice 180 qui s'étend au-delà de la partie sensible 170 forme une première électrode qui collecte les porteurs de charge du premier type produit par la région 176.

Ici, l'épaisseur de la couche semi-conductrice 178 dans la partie périphérique forme les parois latérales d'un trou borgne 188 dont le fond est confondu avec la face 174.

Enfin, uniquement dans la partie périphérique 184, la face de la couche semi-conductrice 178 située du côté opposé à la face 172 est recouverte d'une couche conductrice 190. La couche conductrice 190 forme une deuxième électrode qui collecte les porteurs de charge du deuxième type produit par la région 176.

Dans ce mode de réalisation, la couche conductrice 180 joue également le rôle de couche amplificatrice. A cet effet, elle est principalement réalisée en métaux lourds et son épaisseur $e_{180}$ est supérieure à 15 $\mu$m et, de préférence, supérieure à 30 $\mu$m ou 50 $\mu$m. La couche conductrice 180 est par exemple réalisée en métal telle que du cuivre, du zinc, du tungstène, de l'or ou du plomb.

Dans ce mode de réalisation, la couche 180 est formée par un empilement les unes sur les autres de plusieurs sous-couches chacune réalisée dans un matériau lourd différent. L'épaisseur de chacune de ces sous-couches est, par exemple, supérieure à 15 $\mu$m ou 30 $\mu$m ou 50 $\mu$m. Dans ce cas, de préférence, les sous-couches sont empilées les unes sur les autres dans l'ordre croissant des numéros atomiques des matériaux lourds qui les composent. La sous-couche composée du matériau lourd de plus petit numéro atomique est la plus proche du matériau transducteur. Par exemple, la couche amplificatrice 180 comporte ici, dans l'ordre, une sous-couche 200 d'or puis une sous-couche 202 de cuivre. Dans ce cas, lorsque le rayonnement ionisant primaire arrive sur la sous-couche externe 200, cette sous-couche 200 absorbe le rayonnement ionisant primaire et réémet un rayonnement ionisant secondaire de plus faible énergie que le rayonnement ionisant primaire. Ce rayonnement secondaire est mieux adapté pour exciter la sous-couche 202 suivante. Lorsque la sous-couche 202 suivante est excitée, elle génère à son tour un rayonnement ionisant secondaire d'énergie encore plus faible. L'énergie du rayonnement ionisant secondaire et ainsi progressivement réduite avant d'atteindre le matériau transducteur. Cela permet d'augmenter la sensibilité du dosimètre au rayonnement 166.

De plus, l'épaisseur $e_{180}$ de la couche 180 est choisie pour que la sensibilité du détecteur 160 soit la même lorsqu'il mesure le flux du rayonnement $3_{min}$ et lorsqu'il mesure le flux du rayonnement $3_{max}$. Pour cela, l'épaisseur $e_{180}$ est choisie en mettant en œuvre la même méthodologie que celle décrite en référence à la figure 2. En particulier, des courbes similaires aux courbes 60 et 62 sont obtenues comme précédemment décrit sauf que le jeu de plaques de plomb est remplacé par un jeu de plaques comportant chacune la sous-couche 202 d'épaisseur $e_{202}$ et la sous-couche 200 d'épaisseur $e_{200}$. Les plaques de ce jeu se distinguent les unes des autres uniquement par l'épaisseur $e_{200}$ qui est différente pour chaque plaque. L'épaisseur $e_{202}$ est, par exemple, constante et choisie avant l'étape 54. L'abscisse $e_m$ et l'épaisseur totale $e_T$ sont ensuite déterminés comme précédemment décrit.

Ici, l'épaisseur totale $e_T$ de matériau amplificateur traversée par les rayonnements $3_{min}$ et $3_{max}$ est égale à l'épaisseur $e_{180}$. Dans ces conditions, l'épaisseur $e_{180}$ est choisie entre $0,9e_m$ et $1,1e_m$. Par exemple, l'épaisseur $e_{180}$ est choisie égale à $e_m$. L'épaisseur $e_{200}$ est ensuite prise égale à $e_{180}$-$e_{202}$.

Le fonctionnement de la couche 180 se déduit des explications données dans le mode de réalisation précédent.

### Chapitre II : Variantes :

Variantes du matériau transducteur :

Il est possible d'utiliser d'autres matériaux luminescents générant de la lumière à d'autres longueurs d'onde $\lambda_f$ que celles comprises entre 1 360 nm et 1 625 nm. Dans ce cas, la fibre optique doit être adaptée pour présenter des pertes de propagation aussi faibles que possibles à la longueur d'onde $\lambda_f$ choisie. Par exemple, ce qui a été décrit dans cette demande peut être appliqué au cas des matériaux luminescents générant de la lumière à une longueur d'onde comprise entre 350 nm et 2000 nm ou même en dehors de cette plage de longueurs d'onde.

D'autres scintillateurs sont connus et utilisables à la place du scintillateur 40. Par exemple, tout scintillateur à petit gap ternaire ou quaternaire à base de GaAs ou InP ou GaSb émettant dans l'infrarouge convient. Le scintillateur choisi dépend notamment de la longueur d'onde $\lambda_f$ souhaitée. À titre d'exemple, d'autres scintillateurs utilisables avec des rayons X, on peut citer le platinocyanate de baryum, l'alliage ZnS dopé à l'argent (Ag), l'alliage $Ag_2S$ dopé à l'Europium (Eu), l'alliage $Gd_2O_2S$ dopé à l'Europium (Eu), l'alliage $ZnWO_3$, l'alliage Csl dopé à l'Europium (Eu), les quantum dots... etc.

Dans un mode de réalisation particulier, le matériau luminescent est intégré à l'intérieur du cœur 14 de la fibre optique. Par exemple, l'extrémité distale du cœur 14 de la fibre optique est dopée avec un dopant qui transforme le rayonnement ionisant secondaire en lumière. Par exemple, ce dopant est de l'Erbium incorporé par implantation ionique. Dans ce mode de réalisation, la couche réflectrice est directement déposée sur cette extrémité distale dopée et la couche amplificatrice est déposée sur la couche réflectrice. Par exemple, pour cela, la face extérieure de l'extrémité distale dopée du cœur 14 est mise à nue et les couches réflectrice et amplificatrice sont déposées sur cette face mise à nue. Dans ce cas, la fibre optique ne comporte pas de face d'entrée de lumière puisque la lumière est directement générée par le dopant à l'intérieur du cœur de la fibre optique.

Dans le mode de réalisation de la figure 1, le matériau transducteur peut avoir d'autres formes comme une partie d'une sphère ou d'un cylindre. Les dimensions des grains scintillateurs du matériau transducteur 30 peuvent être plus petites. Par exemple, en variante, la plus grande longueur des grains scintillateurs est inférieure à 10 nm.

Variantes du matériau amplificateur :

La couche amplificatrice peut être principalement réalisée par un ensemble d'un ou plusieurs métaux lourds choisis dans le groupe constitué de l'argent (Ag), du zinc (Zn), du cuivre (Cu), du titane (Ti), du cobalt (Co), du chrome (Cr), du tungstène (W), de l'or (Or) et du plomb (Pb). Puisque l'encombrement de la partie sensible diminue quand le numéro atomique du ou des matériaux lourds utilisés augmente, le choix du matériau amplificateur à utiliser peut aussi être contraint par une limite sur l'encombrement maximal de la partie sensible. La couche amplificatrice peut aussi être réalisée dans tout autre matériau lourd couramment déposé dans l'industrie de l'électronique même s'il ne s'agit pas d'un métal.

Dans un autre mode de réalisation, la couche amplificatrice est réalisée dans un alliage de plusieurs matériaux lourds et, par exemple, dans un alliage d'or et de plomb.

Comme illustré dans le cas particulier du mode de réalisation de la figure 7, la couche amplificatrice n'est pas nécessairement formée d'une seule couche de matériau lourd. Cela s'applique aussi au cas des dosimètres fibrés. De préférence, dans le cas des dosimètres fibrés, le métal lourd de la sous-couche la plus proche du scintillateur comporte un élément du scintillateur. Par exemple, si le scintillateur est du ZnS, alors la sous-couche la plus proche de ce scintillateur est réalisée en Zinc. Ceci permet à l'ultime couche métallique la plus proche du scintillateur de générer des photons X en résonance avec l'absorption du scintillateur.

Dans un mode de réalisation particulier, la couche amplificatrice du détecteur 160 comporte une seule couche amplificatrice. Dans ce cas, la couche amplificatrice du dosimètre à semi-conducteur ne comporte pas un empilement de plusieurs sous-couches amplificatrices.

Autres variantes du détecteur:

D'autres matériaux sont utilisables pour réaliser la couche réflectrice 32. Par exemple, la couche 32 peut aussi être réalisée dans un autre métal ou encore à l'aide d'un empilement de fines couches diélectriques dimensionnées pour réfléchir la lumière.

Lorsque la couche amplificatrice suffit à elle-seule pour provoquer la génération d'une quantité suffisante de photons qui pénètrent à l'intérieur du cœur 14, alors la couche réflectrice 32 est omise. La couche réflectrice peut aussi être omise lorsque la couche amplificatrice réfléchit suffisamment la lumière générée par le matériau luminescent. C'est par exemple le cas lorsque la couche amplificatrice est réalisée en métal. Par exemple, dans un mode de réalisation simplifié, une seule couche en or, d'épaisseur supérieure à 15 $\mu$m, remplit à la fois les fonctions des couches amplificatrice et réflectrice.

Dans un mode de réalisation particulier, les parties sensibles de plusieurs dosimètres identiques sont regroupés en lignes et en colonnes pour former une matrice de plusieurs parties sensibles. Dans ce cas, chaque partie sensible mesure l'intensité d'un pixel d'une image de la répartition spatiale de l'intensité du rayonnement ionisant primaire.

Les différentes variantes de la partie sensible 6 et de la fibre 4 décrites dans la demande déposée sous le numéro PCT/EP2020/074364 sont applicables aux différents modes de réalisation décrits ici.

De nombreux autres modes de réalisation du détecteur 160 sont possibles. Par exemple, la région 176 de déplétion peut aussi être formée sous la forme d'une diode PN ou d'une diode PIN ou par la région de déplétion d'un transistor à effet de champ. En particulier, l'ajout d'une couche amplificatrice dans un dosimètre à semi-conducteur s'applique aux différentes architectures d'un tel dosimètre à semi-conducteur décrites dans la demande WO2017198630A1.

En variante, l'ordre dans lequel sont empilées les épaisseurs de matériau amplificateur et de matériau transducteur est inversé. Dans ce cas, le rayonnement ionisant incident traverse d'abord le matériau transducteur avant d'atteindre le matériau amplificateur. Le fonctionnement d'un tel mode de réalisation est similaire à celui décrit précédemment.

En variante, le détecteur peut comporter des couches en matériau transducteur séparées les unes des autres par une ou plusieurs couches de matériau amplificateur.

En variante, le rayonnement ionisant incident à mesurer se propage parallèlement à l'axe 12 du détecteur 2. Dans ce cas, il ne traverse qu'une seule fois la couche 34. Dès lors, l'épaisseur $e_{34}$ est alors choisie entre $0{,}9e_m$ et $1{,}1e_m$ pour obtenir une calibration de ce détecteur qui varie peu en fonction de l'énergie du rayonnement ionisant incident.

Ce qui a été décrit ici pour l'épaisseur de la couche 34 s'applique à tout autre mode de réalisation de la partie sensible 6. Par exemple, la partie sensible 6 peut être réalisé comme décrit en référence aux figures 3 et 4 de la demande déposée sous le numéro PCT/EP2020/074364.

Variantes du procédé de fabrication :

En variante, le détecteur utilisé pour construire les courbes 60 et 62 n'a pas la même architecture que le détecteur 2. Par exemple, le volume de matériau transducteur utilisé lors des étapes 54 et 90 peut être différent du volume de matériau transducteur du détecteur 2. De préférence, les matériaux transducteurs utilisés dans le détecteur 2 et lors des étapes 54 et 90 sont les mêmes. Le matériau amplificateur utilisé pour construire les courbes 60 et 62 doit être le même que celui utilisé pour fabriquer la partie sensible 6 du détecteur 2.

Comme illustré par l'étape 54, les dimensions latérales des plaques utilisées, c'est-à-dire ici les dimensions perpendiculaires à la direction de propagation du rayonnement ionisant mesuré, peuvent être très différentes de celles mises en œuvre dans la partie sensible 6 fabriquée. Par exemple, lors de la phase de conception, ces dimensions latérales peuvent être de plusieurs centimètres alors que dans la partie sensible, ces dimensions latérales sont inférieures à 1 mm ou 500 $\mu$m.

La construction des courbes 60 et 62 peut être réalisée en amont de la phase 50 de conception du détecteur 2. Par exemple, de telles courbes sont construites au préalable pour un grand nombre de valeurs différentes de l'énergie du rayonnement ionisant à mesurer et pour plusieurs matériaux lourds dont le plomb, l'or et le tungstène. L'étape 54 consiste alors simplement à sélectionner parmi ces différentes courbes préalablement construites pour le même matériau que celui utilisé pour fabriquer la couche 34, les deux courbes construites pour des valeurs $V_1$ et $V_2$ proches, respectivement, des valeurs $V_{min}$ et $V_{max}$.

En variante, les courbes 60 et 62 ne sont pas mesurées expérimentalement mais calculées par simulation numérique. Par exemple, les relations (1) et (2) suivantes sont utilisées pour construire ces courbes :

$$N = N_{0E} \exp\left(-\mu_E^{1,p} t\right) + \Phi_0 S \left(1 - \exp\left(-\mu_E^{1,p} t\right)\right) \sum \tau_E^{1,i} \left(1 - \exp\left(-\mu_{E'}^{0,i} d\right)\right) Y_{E'}^{0,i}$$

$$N_{0E} = \Phi_0 \times S \left(1 - \exp\left(-\mu_E^{0,p} d\right)\right) \times Y_E^{0,p}$$

où :

- N est le nombre de photons générés par seconde ;
- $N_{OE}$ est le nombre de photons générés par seconde par un détecteur identique au détecteur 2 sauf qu'il est dépourvu de la couche 34 amplificatrice ;
- "exp(...)" désigne la fonction exponentielle;
- $\Phi_0$ est la densité du flux de particules ionisantes primaires du rayonnement ionisant primaire qui atteint le matériau transducteur, cette densité étant exprimée en nombre de particules ionisantes primaires par seconde et par mètre carré ;
- S est la surface de matériau transducteur exposé au rayonnement ionisant incident primaire ;
- $\mu_E^{0,p}$ est le taux d'absorption, par le matériau transducteur, de particules ionisantes primaires du rayonnement ionisant primaire d'énergie E ;
- d est l'épaisseur de matériau transducteur traversée par le rayonnement ionisant primaire ;
- $Y_E^{0,p}$ est la probabilité que le matériau transducteur génère un photon visible lorsque ce matériau transducteur absorbe et interagit avec une particule ionisante primaire du rayonnement ionisant primaire d'énergie E ;
- $\mu_E^{1,p}$ est le taux d'absorption de particules ionisantes primaires du rayonnement ionisant primaire d'énergie E par le matériau amplificateur ;
- t est égal à l'épaisseur de matériau amplificateur traversé par le rayonnement ionisant incident primaire avant d'atteindre le matériau transducteur lorsque le détecteur est exposé à ce rayonnement ionisant ;
- le symbole "$\Sigma$" désigne la somme allant de i=1 à i=$T_{max}$, où $T_{max}$ est le nombre de types différents de particules ionisantes secondaires générées par le matériau amplificateur lorsqu'il est exposé au rayonnement ionisant primaire d'énergie E,
- $\tau_E^{1,i}$ est la probabilité que suite à une interaction entre une particule ionisante primaire du rayonnement ionisant primaire d'énergie E avec le matériau amplificateur, une particule ionisante secondaire de type i soit générée;
- i est un identifiant d'un type particulier de particules ionisantes secondaires susceptibles d'être générées par interaction entre le rayonnement ionisant primaire et le matériau amplificateur,
- $\mu_E^{0,i}$ est le taux d'absorption de particules ionisantes secondaires de type i et d'énergie E' par le matériau transducteur ;
- $Y_E^{0,i}$ est la probabilité que le matériau transducteur génère un photon visible lorsqu'il absorbe et interagit avec une particule ionisante secondaire de type i et d'énergie E'.

Ici, l'interaction d'une particule ionisante primaire avec le matériau amplificateur peut produire quatre types différents de particules ionisantes secondaires, à savoir un photon, un positron, un neutron ou un électron. Dans ce cas, les valeurs 1 à 4 de l'indice i correspondent, respectivement, à un photon, à un positron, un neutron et à un électron. $T_{max}$ est égal à quatre.

Dans le cas du plomb et de valeurs $V_1$ et $V_2$ égales, respectivement, à 2 MeV et 4,5 MeV, la littérature disponible indique que $\mu_2^{1,p}$ est égal à 0,52 cm$^{-1}$ et que $\mu_{4,5}^{1,p}$ est égal à 0,48 cm$^{-1}$. Ainsi, pour de faibles épaisseurs de matériau amplificateur, la relation (1) peut être approximée par la relation (3) suivante :

$$N \approx N_{0E} + \Phi_0 S \mu_E^{1,p} \left(\sum \tau_E^{1,i} \left(1 - \exp\left(-\mu_{E'}^{0,i} d\right)\right) Y_{E'}^{0,i}\right) t$$

Ce qui a été décrit dans le cas particulier où les valeurs $V_1$ et $V_2$ sont égales, respectivement à 2 MeV et 4,5 MeV est applicable à d'autres valeurs $V_1$ et $V_2$. En particulier, il est intéressant de choisir les valeurs $V_1$ et $V_2$ égales,

respectivement, à 500 keV et à 10 Mev. En effet, cela permet d'obtenir un détecteur utilisable pour pratiquement toutes les applications liées au domaine de la caractérisation des matériaux et au domaine médical. Il est aussi intéressant de choisir les valeurs $V_1$ et $V_2$ égales, respectivement, à 100 keV et à 600 keV car la plage[100 keV; 600 keV] d'énergies est très utilisée en curiethérapie. D'autres plages d'énergies sont intéressantes. En particulier, les plages [25 MeV; 50 MeV] et [230 MeV ; 250 MeV] sont intéressantes car elles sont utilisées dans le domaine médicale notamment lorsque le rayonnement ionisant est un faisceau de protons. A titre d'illustration, l'ordre de grandeur de l'épaisseur $e_m$, obtenu à partir d'un nombre limité d'expérimentations dans le cas où le matériau amplificateur est du plomb, est donné ci-dessous pour différentes plages d'énergies :

- $e_m$ = 400 $\mu$m lorsque les valeurs $V_1$ et $V_2$ sont égales, respectivement à 1 MeV et 2 MeV,
- $e_m$ = 400 $\mu$m lorsque les valeurs $V_1$ et $V_2$ sont égales, respectivement à 1 MeV et 3 MeV,
- $e_m$ = 460 $\mu$m lorsque les valeurs $V_1$ et $V_2$ sont égales, respectivement à 1 MeV et 4,5 MeV,
- $e_m$ = 450 $\mu$m lorsque les valeurs $V_1$ et $V_2$ sont égales, respectivement à 2,5 MeV et 3 MeV, et
- $e_m$ = 600 $\mu$m lorsque les valeurs $V_1$ et $V_2$ sont égales, respectivement à 3 MeV et 4 MeV.

En variante, les rayonnements $3_{min}$ et $3_{max}$ sont simultanément appliqués sur le détecteur 2. Dans ce cas, le flux de particules ionisantes mesuré par le détecteur 2 est le cumul des flux de particules ionisantes générés par les rayonnements $3_{min}$ et $3_{max}$. On notera que cette mesure des flux combinés des rayonnements $3_{min}$ et $3_{max}$ est rendue possible car la calibration du détecteur 2 est la même pour les deux énergies de ces deux rayonnements $3_{min}$ et $3_{max}$.

En variantes, la mesure de l'intensité du rayonnement ionisant consiste simplement à détecter que l'intensité du rayonnement ionisant dépasse un seuil prédéterminé.

Autres variantes :

Ce qui a été décrit dans le cas particulier où le rayonnement ionisant est un rayon X, s'applique à tout type de rayonnement ionisant. Par exemple, ce qui a été décrit ici peut être adapté au rayon gamma ou aux rayonnements de particules chargées ou de neutrons. Les neutrons n'étant pas chargés, ils ne produisent pas directement d'ionisations en traversant la matière. Par contre, les neutrons provoquent, en traversant le matériau amplificateur, des réactions nucléaires, qui génèrent des rayonnements ionisants. Ainsi, les neutrons sont indirectement ionisants car c'est leur capture par les noyaux ou leur interaction avec ceux-ci qui génère des rayonnements gamma et/ou diverses particules ionisantes. C'est pour cette raison qu'un rayonnement de neutrons est ici considéré comme étant un rayonnement ionisant. Les rayonnements de particules chargées sont par exemple les rayonnements de particule alpha, beta+, beta-, tout type d'ions, par exemple des ions carbones ou de protons. Dans ces cas, le matériau amplificateur et/ou le matériau transducteur 30 doivent être adaptés au rayonnement ionisant incident. Plus précisément, le matériau amplificateur doit générer, en réponse au rayonnement ionisant incident, un rayonnement secondaire apte à exciter le matériau transducteur. Ainsi, il n'est pas nécessaire que le matériau transducteur soit lui-même directement excitable par le rayonnement ionisant primaire. En fait, il suffit qu'il soit sensible au rayonnement ionisant secondaire généré par l'épaisseur de matériau amplificateur. A titre d'illustration, dans le cas où le rayonnement ionisant primaire est un rayon gamma de forte énergie, il est possible de choisir un matériau luminescent uniquement sensible aux rayons X. Dans ce cas, le matériau amplificateur est un matériau qui génère des rayonnements de plus faibles énergies lorsqu'il est exposé au rayon gamma de forte énergie. Ce dernier mode de réalisation est même avantageux dans le cas où plusieurs parties sensibles de plusieurs détecteurs sont situées les unes à côté des autres car il limite les interférences entre ces différentes parties sensibles.

En réponse à son exposition au rayonnement ionisant primaire ou secondaire, le matériau transducteur peut aussi émettre un rayonnement ionisant de plus faible énergie qui l'excite lui-même.

A titre d'illustration et pour limiter l'épaisseur $e_m$, lorsque le rayonnement ionisant primaire est un faisceau d'électrons de forte énergie, le matériau amplificateur est choisi comme décrit ci-dessus dans le cas où le rayonnement ionisant primaire est un rayon X de forte énergie. Par exemple, le matériau amplificateur est du plomb dans ce cas. Lorsque le rayonnement ionisant primaire est un faisceau d'ions, comme par exemple des ions carbones, de très forte énergie, c'est-à-dire dont l'énergie est par exemple comprise entre 1 MeV et 50 MeV, de préférence, le matériau amplificateur choisi est un peu plus léger. Par exemple, le matériau amplificateur choisi dans ce cas est de l'Aluminium. En effet, une épaisseur de 500 $\mu$m de plomb peut atténuer fortement le rayonnement ionisant primaire dans un tel cas. Le principe d'amplification est le même, mais il faut adapter le matériau amplificateur choisi aux particules rayonnées.

Ce qui a été décrit ici s'applique aussi au cas où le rayonnement ionisant primaire est un rayonnement ionisant de faible énergie, Dans ce dernier cas, le rayonnement ionisant secondaire est généralement des rayons X de plus faible énergie ou des électrons.

## Chapitre III : Avantages des modes de réalisation décrits :

Un rayonnement ionisant incident, surtout lorsqu'il est de forte d'énergie, réagit avec les atomes du matériau amplificateur pour générer un rayonnement ionisant secondaire d'énergie plus faible. Le rayonnement ionisant secondaire réagit alors à son tour avec le matériau transducteur pour générer de la lumière ou des charges électriques. Ainsi, à cause de la présence de la couche amplificatrice, le matériau transducteur est exposé à une quantité de rayonnement ionisant de faible énergie plus importante qu'en absence de la couche amplificatrice. Il produit donc une quantité de lumière ou de charges électriques plus importante pour la même intensité du rayonnement ionisant primaire qu'en absence de cette couche amplificatrice. La sensibilité du dosimètre est donc accrue.

Le procédé de fabrication décrit permet d'obtenir un détecteur qui, comme celui décrit dans JP2011191255A, présente une calibration qui varie peu en fonction de l'énergie du rayonnement ionisant primaire à mesurer à partir du moment où cette énergie est comprise entre les valeurs $V_{min}$ et $V_{max}$ prises en compte lors de la conception de ce détecteur.

De plus, pour une même plage $[V_{min}; V_{max}]$ de calibration constante et lorsque les mêmes matériaux lourds sont utilisés dans le détecteur de JP2011191255 et dans le détecteur 2, le détecteur 2 utilise une épaisseur totale $e_T$ de matériau amplificateur beaucoup plus faible. Par exemple, lorsque le détecteur décrit dans JP2011191255 utilise des épaisseurs d'or de plusieurs millimètres, le détecteur 2 n'utilise qu'une épaisseur totale d'or inférieure à 1 mm pour obtenir la même plage $[V_{min}; V_{max}]$ de calibration constante.

Le fait de réaliser la couche amplificatrice principalement en matériau lourd dont le numéro atomique est supérieur ou égal à 74, permet d'obtenir une valeur de l'abscisse $e_m$ inférieure à 1 mm. Cela permet de réduire fortement l'encombrement de la partie sensible et donc d'augmenter la résolution spatiale du détecteur 2.

Le fait que l'épaisseur totale de matériau amplificateur soit inférieure à 1 mm ou 600 $\mu$m permet d'obtenir un très faible encombrement de la partie sensible du dosimètre fibré. Dans ces conditions, les dimensions de la partie sensible restent compatibles avec les techniques de l'endoscopie. Par exemple, il est alors possible de placer la partie sensible du dosimètre fibré directement à l'intérieur de la tumeur à irradier. Cela permet donc de mieux maîtriser les doses de radiation appliquées sur la tumeur.

Le fait que la couche amplificatrice soit elle-même formée par un empilement de plusieurs sous-couches amplificatrices de numéros atomiques décroissants au fur et à mesure que l'on se rapproche du matériau transducteur permet d'augmenter encore plus la sensibilité du dosimètre par rapport au cas d'une couche amplificatrice monocouche.

## Revendications

1. Procédé de fabrication d'un détecteur des flux d'un premier et d'un deuxième rayonnements ionisants incidents qui se distinguent l'un de l'autre seulement par le fait que les énergies médianes des particules ionisantes dans les premier et deuxième rayonnements ionisants incidents sont égales, respectivement, à une première et à une deuxième valeurs, la deuxième valeur différant de la première valeur par au moins 500 keV, ce procédé comportant :

   - l'acquisition (52) des première et deuxième valeurs écartées l'une de l'autre par au moins 500 keV, puis
   - le choix d'une épaisseur totale de matériau amplificateur traversée lorsque ce détecteur est exposé aux premier et deuxième rayonnements ionisants incidents, cette épaisseur totale de matériau amplificateur étant apte à générer un rayonnement ionisant secondaire d'énergie plus faible lorsqu'elle est excitée par les premier et deuxième rayonnements ionisants incidents, cette épaisseur totale étant supérieure à 15 $\mu$m, puis
   - la réalisation (102) d'un empilement comportant, dans la direction de propagation des premier et deuxième rayonnements ionisants incidents, l'épaisseur totale choisie de matériau amplificateur et une épaisseur de matériau transducteur, cette épaisseur de matériau transducteur étant apte à générer des photons ou des charges électriques quand elle est excitée par le rayonnement ionisant secondaire généré par l'épaisseur totale de matériau amplificateur,
   - le raccordement (104) d'un capteur de photons ou de charges électriques à l'empilement réalisé pour compter le nombre de photons ou de charges électriques générés par seconde par l'épaisseur de matériau transducteur,

   **caractérisé en ce que** le choix de l'épaisseur totale de matériau amplificateur comporte :

   - la détermination (92) de l'abscisse $e_m$ d'un point d'intersection entre une première et une deuxième courbes, les première et deuxième courbes représentant l'évolution du nombre de photons ou de charges électriques générés par seconde par le matériau transducteur en fonction de l'épaisseur totale de matériau amplificateur lorsque le matériau transducteur est irradié, à travers cette épaisseur de matériau transducteur, par, respectivement, le premier et le deuxième rayonnements ionisants incidents, puis

- la sélection (94) de l'épaisseur totale de matériau amplificateur entre $0,9e_m$ et $1,1e_m$.

2. Procédé selon la revendication 1, dans lequel le procédé comporte la sélection (53) du ou des matériaux amplificateurs utilisés pour réaliser 70 % de l'épaisseur de matériau amplificateur dans le groupe constitué de l'or (Or), du plomb (Pb) et du Tungstène (W).

3. Procédé selon l'une quelconque des revendications précédentes, dans lequel la réalisation (102) de l'empilement est choisi dans le groupe constitué :

   - de la réalisation d'un empilement comportant une unique couche amplificatrice réalisée en matériau amplificateur et une unique couche de matériau transducteur, l'épaisseur de l'unique couche amplificatrice étant comprise entre $0,9e_m$ et $1,1e_m$, et
   - de la réalisation d'un empilement comportant uniquement une première et une seconde couches amplificatrices réalisées en matériau amplificateur et une unique couche de matériau transducteur interposée entre les première et seconde couches amplificatrices, la somme des épaisseurs des première et seconde couches amplificatrices étant comprise entre $0,9e_m$ et $1,1e_m$.

4. Procédé selon l'une quelconque des revendications précédentes, dans lequel la première valeur est inférieure à 2,5 MeV et la deuxième valeur est supérieure à 4 MeV.

5. Procédé selon la revendication 4, dans lequel les première et deuxième valeurs sont égales, respectivement, à 500 keV et 10 MeV.

6. Procédé de mesure des flux de rayonnements ionisants incidents, ce procédé comportant une étape de mesure (114), à l'aide d'un même détecteur, des flux de plusieurs rayonnements ionisants incidents émis successivement les uns après les autres, les énergies médianes des particules ionisantes de ces rayonnements ionisants incidents à mesurer variant entre une valeur minimale et une valeur maximale, les valeurs minimale et maximale étant écartées l'une de l'autre par au moins 500 keV,

   dans lequel le détecteur utilisé pour mesurer les flux de ces rayonnements ionisants incidents comporte :

   - un seul empilement (30, 34; 176, 180) contenant, dans une direction de propagation des rayonnements ionisants incidents, une épaisseur totale $e_T$ de matériau amplificateur et une épaisseur d'un matériau transducteur traversées par les rayonnements ionisants incidents à mesurer,

   l'épaisseur de matériau transducteur étant apte à générer des photons ou des charges électriques quand elle est excitée par un rayonnement ionisant secondaire d'énergie plus faible que l'énergie du rayonnement ionisant incident à mesurer actuellement émis,
   l'épaisseur totale de matériau amplificateur étant apte à générer ce rayonnement ionisant secondaire d'énergie plus faible lorsqu'elle est excitée par le rayonnement ionisant incident à mesurer actuellement émis, cette épaisseur totale $e_T$ étant supérieure à 15 $\mu$m, et

   - un capteur de photons ou de charges électriques raccordé à l'empilement pour compter le nombre de photons ou de charges électriques générés par seconde par l'épaisseur de matériau transducteur,

   **caractérisé en ce que** l'épaisseur totale $e_T$ de matériau amplificateur du détecteur utilisé pour mesurer les flux de ces rayonnements ionisants incidents est comprise entre $0,9e_m$ et $1,1e_m$, où l'épaisseur $e_m$ est l'épaisseur totale de matériau amplificateur pour laquelle les nombres de photons ou de charges électriques générés par seconde par l'épaisseur de matériau transducteur lorsque l'empilement est irradié, respectivement, par des premier et deuxième rayonnements ionisants incidents, sont égaux,
   ces premier et deuxième rayonnements ionisants incidents étant égaux aux rayonnements ionisants dont les énergies médianes des particules ionisantes sont égales auxdites valeurs, respectivement, minimale et maximale mises en œuvre lors de l'étape de mesure.

7. Procédé selon la revendication 6, dans lequel l'empilement du détecteur, utilisé pour mesurer les flux des rayonnements ionisants incidents, appartient au groupe constitué :

   - d'un empilement comportant une unique couche amplificatrice (180) réalisée en matériau amplificateur et une unique couche (176) de matériau transducteur, l'épaisseur de l'unique couche amplificatrice étant comprise entre 0,9$e_m$ et 1,1$e_m$, et

- d'un empilement comportant uniquement une première et une seconde couches amplificatrices (34) en matériau amplificateur et une unique couche (30) de matériau transducteur interposée entre les première et seconde couches amplificatrices (34), la somme des épaisseurs des première et seconde couches amplificatrices étant comprise entre 0, 9$e_m$ et 1,1$e_m$.

8. Procédé selon l'une quelconque des revendications 6 à 7, dans lequel l'étape de mesure comporte la mesure des flux d'un premier et d'un deuxième rayonnements ionisants incidents qui se distinguent l'un de l'autre seulement par le fait que les énergies médianes des particules ionisantes dans les premier et deuxième rayonnements ionisants incidents sont égales, respectivement, à une première et à une deuxième valeurs, les première et deuxième valeurs étant choisies dans le groupe constitué :

   - d'une première valeur égale à 100 keV et d'une deuxième valeur égale à 600 keV,
   - d'une première valeur égale à 2 MeV et d'une deuxième valeur égale à 4,5 MeV,
   - d'une première valeur égale à 500 keV et d'une deuxième valeur égale à 10 MeV,
   - d'une première valeur égale à 25 MeV et d'une deuxième valeur égale à 50 MeV, et
   - d'une première valeur égale à 230 MeV et d'une deuxième valeur égale à 250 MeV.

9. Procédé selon l'une quelconque des revendications 6 à 8, dans lequel 70 %, en masse, du ou des matériaux amplificateurs utilisés pour réaliser l'épaisseur totale de matériau amplificateur sont choisis dans le groupe constitué de l'or (Or), du plomb (Pb) et du Tungstène (W) et l'épaisseur $e_m$ est inférieure à 1 mm.

10. Procédé selon l'une quelconque des revendications 6 à 9, dans lequel :

   - le capteur est un capteur de photons,
   - le détecteur comporte une fibre optique (4) comportant un cœur (14) apte à guider de la lumière, cette fibre optique raccordant le matériau transducteur (30) au capteur (10), et
   - le matériau transducteur est un matériau luminescent (30) apte, lorsqu'il est excité par le rayonnement ionisant secondaire, à générer la lumière guidée par le cœur de la fibre optique.


**Patentansprüche**

1. Verfahren zur Herstellung eines Detektors für die Flüsse einer ersten und einer zweiten einfallenden ionisierenden Strahlung, die sich voneinander nur dadurch unterscheiden, dass die medianen Energien der ionisierenden Partikel in der ersten und der zweiten einfallenden ionisierenden Strahlung gleich einem ersten beziehungsweise einem zweiten Wert sind, wobei sich der zweite Wert von dem ersten Wert um mindestens 500 keV unterscheidet, wobei dieses Verfahren umfasst:

   - das Erfassen (52) des ersten und des zweiten Werts, die voneinander um mindestens 500 keV beabstandet sind, dann
   - das Wählen einer Verstärkungsmaterialgesamtdicke, die durchdrungen wird, wenn dieser Detektor der ersten und der zweiten einfallenden ionisierenden Strahlung ausgesetzt wird, wobei diese Verstärkungsmaterialgesamtdicke geeignet ist, eine energieärmere sekundäre ionisierende Strahlung zu erzeugen, wenn sie durch die erste und die zweite einfallende ionisierende Strahlung angeregt wird, wobei diese Gesamtdicke mehr als 15 $\mu$m beträgt, dann
   - das Ausführen (102) eines Stapels, der in der Ausbreitungsrichtung der ersten und der zweiten einfallenden ionisierenden Strahlung die gewählte Verstärkungsmaterialgesamtdicke und eine Wandlermaterialdicke umfasst, wobei diese Wandlermaterialdicke geeignet ist, Photonen oder elektrische Ladungen zu erzeugen, wenn sie durch die sekundäre ionisierende Strahlung, die durch die Verstärkungsmaterialgesamtdicke erzeugt wird, angeregt wird,
   - das Anschließen (104) eines Sensors für Photonen oder elektrische Ladungen an den ausgeführten Stapel, um die Anzahl von Photonen oder elektrischen Ladungen zu zählen, die pro Sekunde durch die Wandlermaterialdicke erzeugt werden,

   **dadurch gekennzeichnet, dass** die Wahl der Verstärkungsmaterialgesamtdicke umfasst:

- das Bestimmen (92) der Abszisse $e_m$ eines Schnittpunkts zwischen einer ersten und einer zweiten Kurve, wobei die erste und die zweite Kurve den Verlauf der Anzahl von Photonen oder elektrischen Ladungen darstellen, die pro Sekunde durch das Wandlermaterial in Abhängigkeit von der Verstärkungsmaterialgesamtdicke erzeugt werden, wenn das Wandlermaterial, durch diese Wandlermaterialdicke hindurch, durch die erste beziehungsweise die zweite einfallende ionisierende Strahlung bestrahlt wird, dann

- das Auswählen (94) der Verstärkungsmaterialgesamtdicke zwischen $0{,}9e_m$ und $1{,}1e_m$.

2. Verfahren nach Anspruch 1, wobei das Verfahren das Auswählen (53) des oder der zum Ausführen von 70 % der Verstärkungsmaterialdicke verwendeten Verstärkungsmaterialien aus der Gruppe umfasst, die aus Gold (Or), Blei (Pb) und Wolfram (W) besteht.

3. Verfahren nach einem der vorhergehenden Ansprüche, wobei das Ausführen (102) des Stapels aus der Gruppe gewählt ist, die aus Folgendem besteht:

- dem Ausführen eines Stapels, der eine einzige aus Verstärkungsmaterial ausgeführte Verstärkungsschicht und eine einzige Wandlermaterialschicht umfasst, wobei die Dicke der einzigen Verstärkungsschicht zwischen $0{,}9e_m$ und $1{,}1e_m$ beträgt, und

- dem Ausführen eines Stapels, der nur eine erste und eine zweite Verstärkungsschicht, die aus Verstärkungsmaterial ausgeführt sind, und eine einzige Wandlermaterialschicht, die zwischen der ersten und der zweiten Verstärkungsschicht angeordnet ist, umfasst, wobei die Summe der Dicken der ersten und der zweiten Verstärkungsschicht zwischen $0{,}9e_m$ und $1{,}1e_m$ beträgt.

4. Verfahren nach einem der vorhergehenden Ansprüche, wobei der erste Wert kleiner als 2,5 MeV ist und der zweite Wert größer als 4 MeV ist.

5. Verfahren nach Anspruch 4, wobei der erste und der zweite Wert 500 keV beziehungsweise 10 MeV betragen.

6. Verfahren zum Messen der Flüsse von einfallenden ionisierenden Strahlungen, wobei dieses Verfahren einen Schritt des Messens (114), mithilfe eines selben Detektors, der Flüsse von mehreren einfallenden ionisierenden Strahlungen umfasst, die sukzessive nacheinander emittiert werden, wobei die medianen Energien der ionisierenden Partikel dieser zu messenden einfallenden ionisierenden Strahlungen zwischen einem minimalen Wert und einem maximalen Wert variieren, wobei die minimalen und maximalen Werte voneinander um mindestens 500 keV beabstandet sind,

wobei der zum Messen der Flüsse dieser einfallenden ionisierenden Strahlungen verwendete Detektor umfasst:

- einen einzigen Stapel (30, 34; 176, 180), der in einer Ausbreitungsrichtung der einfallenden ionisierenden Strahlungen eine Verstärkungsmaterialgesamtdicke $e_T$ und eine Dicke eines Wandlermaterials enthält, die von den zu messenden einfallenden ionisierenden Strahlungen durchdrungen werden,

wobei die Wandlermaterialdicke geeignet ist, Photonen oder elektrische Ladungen zu erzeugen, wenn sie durch eine sekundäre ionisierende Strahlung angeregt wird, die energieärmer als die aktuell emittierte, zu messende einfallende ionisierende Strahlung ist,
wobei die Verstärkungsmaterialgesamtdicke geeignet ist, diese energieärmere sekundäre ionisierende Strahlung zu erzeugen, wenn sie durch die aktuell emittierte, zu messende einfallende ionisierende Strahlung angeregt wird, wobei diese Gesamtdicke $e_T$ mehr als 15 $\mu$m beträgt, und

- einen Sensor für Photonen oder elektrische Ladungen, der an den Stapel angeschlossen ist, um die Anzahl von Photonen oder von elektrischen Ladungen zu zählen, die pro Sekunde durch die Wandlermaterialdicke erzeugt werden,

dadurch gekennzeichnet, dass die Verstärkungsmaterialgesamtdicke $e_T$ des zum Messen der Flüsse dieser einfallenden ionisierenden Strahlungen verwendeten Detektors zwischen $0{,}9e_m$ und $1{,}1e_m$ beträgt, wobei die Dicke $e_m$ die Verstärkungsmaterialgesamtdicke ist, bei welcher die Anzahl von Photonen oder von elektrischen Ladungen, die pro Sekunde durch die Wandlermaterialdicke erzeugt werden, wenn der Stapel durch erste beziehungsweise zweite einfallende ionisierende Strahlungen bestrahlt wird, gleich sind,
wobei diese ersten und zweiten einfallenden ionisierenden Strahlungen gleich den ionisierenden Strahlungen sind, bei denen die medianen Energien der ionisierenden Partikel gleich den bei dem Schritt des Messens eingesetzten minimalen und maximalen Werten sind.

7.  Verfahren nach Anspruch 6, wobei der Stapel des Detektors, der zum Messen der Flüsse der einfallenden ionisierenden Strahlungen verwendet wird, zu der Gruppe gehört, die besteht aus:

    - einem Stapel, der eine einzige aus Verstärkungsmaterial ausgeführte Verstärkungsschicht (180) und eine einzige Schicht (176) Wandlermaterial umfasst, wobei die Dicke der einzigen Verstärkungsschicht zwischen $0{,}9e_m$ und $1{,}1e_m$ beträgt, und
    - einem Stapel, der nur eine erste und eine zweite Verstärkungsschicht (34) aus Verstärkungsmaterial und eine einzige Schicht (30) Wandlermaterial, die zwischen der ersten und der zweiten Verstärkungsschicht (34) angeordnet ist, umfasst, wobei die Summe der Dicken der ersten und der zweiten Verstärkungsschicht zwischen $0{,}9e_m$ und $1{,}1e_m$ beträgt.

8.  Verfahren nach einem der Ansprüche 6 bis 7, wobei der Schritt des Messens das Messen der Flüsse einer ersten und einer zweiten einfallenden ionisierenden Strahlung umfasst, die sich voneinander nur dadurch unterscheiden, dass die medianen Energien der ionisierenden Partikel in der ersten und der zweiten einfallenden ionisierenden Strahlung gleich einem ersten beziehungsweise einem zweiten Wert sind, wobei der erste und der zweite Wert aus der Gruppe gewählt sind, die besteht aus:

    - einem ersten Wert von 100 keV und einem zweiten Wert von 600 keV,
    - einem ersten Wert von 2 MeV und einem zweiten Wert von 4,5 MeV,
    - einem ersten Wert von 500 keV und einem zweiten Wert von 10 MeV,
    - einem ersten Wert von 25 MeV und einem zweiten Wert von 50 MeV, und
    - einem ersten Wert von 230 MeV und einem zweiten Wert von 250 MeV.

9.  Verfahren nach einem der Ansprüche 6 bis 8, wobei 70 Massen-% des oder der zum Ausführen der Verstärkungsmaterialgesamtdicke verwendeten Verstärkungsmaterialien aus der Gruppe gewählt sind, die aus Gold (Or), Blei (Pb) und Wolfram (W) besteht, und die Dicke $e_m$ weniger als 1 mm beträgt.

10. Verfahren nach einem der Ansprüche 6 bis 9, wobei:

    - der Sensor ein Photonensensor ist,
    - der Detektor eine optische Faser (4) umfasst, die einen Kern (14) umfasst, der geeignet ist, Licht zu leiten, wobei diese optische Faser das Wandlermaterial (30) an den Sensor (10) anschließt, und
    - das Wandlermaterial ein lumineszentes Material (30) ist, das bei seiner Anregung durch die sekundäre ionisierende Strahlung geeignet ist, das durch den Kern der optischen Faser geleitete Licht zu erzeugen.

**Claims**

1.  Method for manufacturing a detector for detecting the flows of a first and a second incident ionizing radiation that only differ from each other by the fact that the median energies of the ionizing particles in the first and second incident ionizing radiation are equal to a first and to a second value, respectively, with the second value differing from the first value by at least 500 keV, said method comprising:

    - acquiring (52) the first and second values separated from each other by at least 500 keV; then
    - selecting a total thickness of amplifying material traversed when this detector is exposed to the first and second incident ionizing radiation, with this total thickness of amplifying material being able to generate a lower energy secondary ionizing radiation when it is excited by the first and second incident ionizing radiation, this total thickness being greater than 15 $\mu$m; then
    - producing (102) a stack comprising, in the direction of propagation of the first and second incident ionizing radiation, the selected total thickness of amplifying material and a thickness of transducing material, with this thickness of transducing material being able to generate photons or electrical charges when it is excited by the secondary ionizing radiation generated by the total thickness of amplifying material;
    - connecting (104) a sensor of photons or electrical charges to the produced stack in order to count the number of photons or electrical charges generated per second by the thickness of transducing material,

    **characterized in that** selecting the total thickness of amplifying material comprises:

- determining (92) the abscissa $e_m$ of a point of intersection between a first and a second curve, with the first and second curves representing the evolution of the number of photons or electrical charges generated per second by the transducing material as a function of the total thickness of amplifying material when the transducing material is irradiated, through this thickness of transducing material, by the first and second incident ionizing radiation, respectively; then
- selecting (94) the total thickness of amplifying material between 0.9 $e_m$ and 1.1 $e_m$.

2. Method according to Claim 1, wherein the method comprises selecting (53) the one or more amplifying materials used to produce 70% of the thickness of amplifying material in the group made up of gold (Or), lead (Pb) and tungsten (W).

3. Method according to any one of the preceding claims, wherein the production (102) of the stack is selected from the group made up of:

   - producing a stack comprising a single amplifying layer made of amplifying material and a single layer of transducing material, with the thickness of the single amplifying layer ranging between 0.9 $e_m$ and 1.1 $e_m$; and
   - producing a stack comprising only a first and a second amplifying layer made of amplifying material and a single layer of transducing material interposed between the first and second amplifying layers, with the sum of the thicknesses of the first and second amplifying layers ranging between 0.9 $e_m$ and 1.1 $e_m$.

4. Method according to any one of the preceding claims, wherein the first value is less than 2.5 MeV and the second value is greater than 4 MeV.

5. Method as claimed in Claim 4, wherein the first and second values are equal to 500 keV and 10 MeV, respectively.

6. Method for measuring flows of incident ionizing radiation, said method comprising a step (114) of measuring, using the same detector, flows of multiple incident ionizing radiation levels successively emitted one after the other, with the median energies of the ionizing particles of these incident ionizing radiation levels to be measured varying between a minimum value and a maximum value, with the minimum and maximum values being spaced apart by at least 500 keV;

   wherein the detector used to measure the flows of these incident ionizing radiation levels comprises:

   - a single stack (30, 34; 176, 180) containing, in a direction of propagation of the incident ionizing radiation, a total thickness $e_T$ of amplifying material and a thickness of a transducing material traversed by the incident ionizing radiation to be measured,

   with the thickness of transducing material being able to generate photons or electrical charges when it is excited by a lower energy secondary ionizing radiation than the energy of the incident ionizing radiation to be measured that is currently emitted,
   with the total thickness of amplifying material being able to generate this lower energy secondary ionizing radiation when it is excited by the incident ionizing radiation to be measured that is currently emitted, this total thickness $e_T$ being greater than 15 $\mu$m; and

   - a sensor for photons or electrical charges connected to the stack for counting the number of photons or electrical charges generated per second by the thickness of transducing material,

   **characterized in that** the total thickness $e_T$ of amplifying material of the detector used to measure the flows of these incident ionizing radiation levels ranges between 0.9 $e_m$ and 1.1 $e_m$, where the thickness $e_m$ is the total thickness of amplifying material for which the numbers of photons or electrical charges generated per second by the thickness of transducing material when the stack is irradiated by first and second incident ionizing radiation, respectively, are equal,
   with this first and second incident ionizing radiation being equal to the ionizing radiation for which the median energies of the ionizing particles are equal to said minimum and maximum values, respectively, implemented during the measurement step.

7. Method according to Claim 6, wherein the stack of the detector, used to measure the flows of incident ionizing radiation, belongs to the group made up of:

   - a stack comprising a single amplifying layer (180) made of amplifying material and a single layer (176) of transducing material, with the thickness of the single amplifying layer ranging between 0.9 $e_m$ and 1.1 $e_m$; and
- a stack comprising only a first and a second amplifying layer (34) made of amplifying material and a single layer (30) of transducing material interposed between the first and second amplifying layers (34), with the sum of the thicknesses of the first and second amplifying layers ranging between 0.9 $e_m$ and 1.1 $e_m$.

8. Method according to either one of Claims 6 and 7, wherein the measurement step comprises measuring the flows of a first and a second incident ionizing radiation that differ from each other only by the fact that the median energies of the ionizing particles in the first and second incident ionizing radiation are equal to a first and a second value, respectively, with the first and second values being selected from the group made up of:

- a first value equal to 100 keV and a second value equal to 600 keV;
- a first value equal to 2 MeV and a second value equal to 4.5 MeV;
- a first value equal to 500 keV and a second value equal to 10 MeV;
- a first value equal to 25 MeV and a second value equal to 50 MeV; and
- a first value equal to 230 MeV and of a second value equal to 250 MeV.

9. Method according to any one of Claims 6 to 8, wherein 70%, by mass, of the one or more amplifying materials used to produce the total thickness of amplifying material is selected from the group made up of gold (Or), lead (Pb) and tungsten (W) and the thickness $e_m$ is less than 1 mm.

10. Method according to any one of Claims 6 to 9, wherein:

- the sensor is a photon sensor;
- the detector comprises an optical fibre (4) comprising a core (14) able to guide light, with this optical fibre connecting the transducing material (30) to the sensor (10); and
- the transducing material is a luminescent material (30) able, when it is excited by the secondary ionizing radiation, to generate the light guided by the core of the optical fibre.

Fig. 1

Fig. 2

Fig. 3

Fig. 4

Fig. 5

Fig. 6

Fig. 7

**EP 4 285 161 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2011191255 A
- WO 9918130 A1
- US 2017184730 A1
- EP 0703469 A2
- EP 2020074364 W
- WO 2017198630 A
- WO 2017198630 A1
- JP 2011191255 B